# EUROPEAN PATENT APPLICATION

(11) **EP 4 822 920 A1**
(43) Date of publication of application: **14.10.2026**
(21) Application number: 25170076.1
(22) Date of filing: 11.04.2025
(51) Int. Cl.: H02G 1/08, B60K 6/36, B60K 6/365, B60K 6/547, B60L 50/16, F16H 3/00

(54) **CABLE INSTALLATION DEVICE COMPRISING A SWITCHING MECHANISM**

(71) Applicant: Jetting AB, 522 30 Tidaholm (SE)
(72) Inventor: JOHANSSON, Håkan, 52293 Tidaholm (SE)
(74) Representative: Bergenstråhle & Partners AB

(57) **Abstract**

Cable installation device (1) comprising a drive shaft (51); a drive unit (50) connected to the drive shaft (51) and arranged for driving the drive shaft (51) to rotate with a rotational speed and with a power (P); a drive wheel (10) for driving a cable (2) into a duct (3). Further, a transfer mechanism (20) is connected to the drive shaft (51) and to the drive wheel (10), which can be in a first state in which the transfer mechanism (20) rotates with the rotational speed of the drive shaft, and in a second state in which the transfer mechanism (20) rotates with a second rotational speed that is lower than the rotational speed of the drive shaft, when the drive unit drives the drive shaft and further a switching mechanism (30), arranged for switching the transfer mechanism (20) between the first state and the second state.

## Description

### Technical field

The present invention relates generally to a cable installation device, which is a machine especially adapted for transporting/installing ("blowing"), a cable, such as a fiber cable or an electrical cable, into or through a duct. In the description below, the term "fiber blower" is sometimes used instead of cable installation device, to describe the invention.

### Background art

In prior art, it is well known to use cable installation devices, often called "fiber blowers", for installing fiber cables or other cables into ducts, which ducts for example are positioned in the ground, when setting up an infrastructure for data traffic or electricity, such as a fiber net. When setting up a fiber net, ducts are first installed, for example into the ground or in a building. The ducts are used for hosting and protecting one or more cables of different kinds, such as electric cables and fiber cables. The ducts may be several hundred meters long, between two connection points, which means that it is quite difficult to push/pull/transport a cable through the duct, between two connection points, why a cable installation device may be used. Known such cable installation devices normally have some kind of driving means, like one or more motors, drive wheels etc., wherein the fiber cable(s) is(are) driven into a duct, normally from one or more fiber/cable roll(s) holding the fiber or cable. Known cable installation devices are robust and powerful, and the devices may be pneumatically operated, why such cable installation device may generally be described as pressurized-fluid driven cable installation device. Some types are designed for driving single cables and some for relining of multiple micro ducts. Cables typically are between 4 and 40 mm thick and the duct dimensions between 10 and 63 mm. The air pressure is normally used for driving one or more motors, possibly also for other functions of the cable installation device (like clutches or the like), and finally for blowing air into the duct, to facilitate a low friction between the cable and the surrounding duct. Some machines use water instead of air to facilitate the lowering of friction between the cable and the duct, wherein water is connected to the duct at the blower machine. The driving torque is determined by the motor and/ or pneumatic pressure and the driving speed is determined by the size of the drive wheels. The speed may be controlled by a throttle, which also may set the feeding direction (forward/backward). Prior art cable installation devices have a maximum speed at a given torque and to facilitate different maximum torques/speed combinations, different cable installation devices must be used, to cope with the range/the need. Depending on the application, different torques must be used, where the number of cables (one or multiple), the dimension of the cable and duct, the distance, etc. determines the power needed. For example, a maximum pull or push force may be from very small numbers of Newton (handheld machines) up to several thousand Newton, and typically, high power devices are used for long distance push or pull operations. Since cable installation devices are quite expensive and that the demands at the market move towards higher power and different need of driving speed of the fiber/cable, the demands differ between different setups. Thus, it would be an advantage to extend the range, i.e., the possible combination of power and speed, for a single cable installation device, to be able to use one device for more applications.

### Summary of invention

An object of the present invention is to overcome the above mentioned problem, and this is achieved by a cable installation device according to the independent claim 1.

According to an aspect, a cable installation device arranged for installing a cable into a duct is disclosed. The cable installation device comprises a first end, which is arranged for receiving a cable, for example from a roll on which the cable or fiber is rolled, and which cable is to be installed in a duct. Opposite the first end is a second end of the device arranged, which second end is arranged for receiving an end of a duct into which the cable is to be installed. This end may comprise some kind of locking means for the duct and guiding means for the cable for guiding it into the duct. The cable installation device further comprises a drive shaft, which extends along a first axis, a drive unit, which is connected to the drive shaft, and which is arranged for driving the drive shaft to rotate with a rotational speed and with a power. The cable installation device further comprises a drive wheel, which is arranged for directly or indirectly engaging with the cable to be installed in the duct for driving the cable into the duct. Preferably, the drive wheel is arranged to engage with a belt for driving the cable, but the invention is not limited to the use of a belt. Further, the cable installation device comprises a transfer mechanism, which is arranged to transfer the power of the drive shaft to the drive wheel, and the transfer mechanism is connected to the drive shaft and to the drive wheel. The transfer mechanism can be in a first state in which the transfer mechanism transfers the power of the drive shaft to the drive wheel so that the drive wheel rotates with the rotational speed of the drive shaft, when the drive unit drives the drive shaft, and in a second state in which the transfer mechanism transfers the power of the drive shaft to the drive wheel so that the drive wheel rotates with a second rotational speed that is lower than the rotational speed of the drive shaft, when the drive unit drives the drive shaft. The cable installation device further comprises a switching mechanism, which is arranged to switch the transfer mechanism between the first state and the second state.

By such a cable installation device, the torque and rotational speed may rapidly be changed, and the same device may be used for different demands at the same application, due to shifting demands during the installation, or at different applications, where one cable installation device covers a broader range of demands. For example, prior art cable installation devices may for example have a setup of a maximum pushing force (torque) of 550 N at an installation speed of maximum 200 m/min, while another cable installation devices may for example have a setup of a maximum pushing force of 1000 N at an installation speed of maximum 110 m/min. Yet another may for example have a setup of a maximum pushing force of 1800 N at an installation speed of maximum 50 m/min. With the inventive cable installation device, it is possible to change the setup between pushing force (torque) and installation speed, which is not known in prior art.

According to an embodiment, the switching mechanism can take on a first position and a second position, wherein in the first position, the transfer mechanism is in the first state, and in the second position, the transfer mechanism is in the second state. By having two separate positions, which preferably are two physically different positions of the switching mechanism, the switching mechanism clearly defines/shows in which state the transfer mechanism is and thus, in which state/setup the cable installation device is set.

According to an embodiment, the transfer mechanism comprises a set of transfer wheels and first engagement means, wherein the set of transfer wheels is arranged between the drive shaft and the drive wheel in a radial direction of the drive shaft. The first engagement means is fixedly connected to the drive wheel such that the first engagement means faces the set of transfer wheels, wherein the set of transfer wheel is engaged with the drive shaft and with the first engagement means. By that, the power and the movement of the drive shaft is transferred o the drive wheel, via the set of transfer wheels and first engagement means.

According to an embodiment, the transfer mechanism comprises a second set of transfer wheels, wherein the second set of transfer wheels is arranged between the drive shaft and the drive wheel in a radial direction of the drive shaft, wherein the first engagement means faces the second set of transfer wheels and the second set of transfer wheels is engaged with the drive shaft and with the first engagement means. The second set of transfer wheels is further circumferentially displaced around the drive shaft in relation to the set of transfer wheels. Thus, the set of transfer wheels may be called the first set of transfer wheels, since there is a second set of transfer wheels, if appropriate. By having two sets of transfer wheels, the rotation direction of the drive shaft and the rotation direction of the drive wheel may be the same, instead as if using one set of transfer wheels, the directions will be opposite to each other.

According to an embodiment, the set of transfer wheels comprises a first transfer wheel and at least one second transfer wheel, wherein the first transfer wheel is engaged with the drive shaft, the at least one second transfer wheel is engaged with the first engagement means, and the first transfer wheel is engaged with the at least one second transfer wheel.

According to an embodiment, the drive shaft is equipped with a gearwheel, wherein the set of transfer wheels is a set of transfer gearwheels and the first engagement means is an inner gearwheel of the drive wheel. Thus, the set of transfer wheels is engaged with the drive shaft by the set of transfer gearwheels being engaged with the gearwheel of the drive shaft, and the set of transfer wheels is engaged with the first engagement means by the set of transfer gearwheels being engaged with the inner gearwheel of the drive wheel.

According to an embodiment, the transfer mechanism further comprises a first gable and a second gable, mutually displaced along the drive shaft and one transfer shaft per transfer wheel of the set of transfer wheels, and, optionally, one transfer shaft per transfer wheel of a second set of transfer wheels. The transfer shafts each has an extension parallel with the drive shaft and each shaft is fixedly arranged to the first gable and to the second gable (extending between the first and second gable). Further, each transfer wheel is rotationally arranged on its respective transfer shaft, and wherein the transfer shafts are arranged at a distance from each other. This means that the transfer wheels may rotate with the entire transfer mechanism (including the first and second gable) which is with the rotation of the shaft, as in the case in the first state, and the transfer wheels may rotate arounds its respective transfer shaft, which is not a rotation with the shaft, as in the case in the second state. This will be further described in this application.

According to an embodiment, the switching mechanism comprises an axially moveable part, which is arranged to move axially along the first axis towards the drive wheel into the second position, and away from the drive wheel into the first position, wherein in the first position, the axially moveable part is arranged to rotate with the rotation of the drive shaft, and in the second position, the moveable part is arranged not to rotate with the drive shaft. By that, the switch enables to switch between the two states in which the transfer mechanism takes the first or the second state.

According to an embodiment, the axially moveable part comprises an engaging mechanism, and when the switching mechanism is in the first position, an end of the drive shaft is engaged with the engaging mechanism, so that the axially moveable part rotates with the rotation of the drive shaft. Preferably, the end of the drive shaft comprises a transfer gearwheel which engages with the engaging mechanism of the axially moveable part, which may be edges of a recess which has a corresponding design as the transfer gearwheel of the drive shaft. By that the moveable part is moveable in the axial direction (of the shaft), the engagement between the moveable part and the drive shaft may be coupled (first position) and decoupled (second position).

According to an embodiment, the axially moveable part of the switching mechanism comprises at least one locking pin, which, in the first position, is disengaged with a chassis of the cable installation device, and in the second position, is engaged with the chassis. This means that in the first position, the transfer mechanism takes its first state/first position, in which the transfer mechanism rotates with the drive shaft, and when the locking pin of the switching mechanism §is engaged with the chassis, the transfer mechanism is prevented from moving with the drive shaft, wherein the transfer wheels instead rotates around their own shafts/axis, wherein the "gear ratio" of the cable installation device is changed compared to first state/first position.

According to an embodiment, the axially moveable part of the switching mechanism is arranged to engage with the transfer mechanism by the moveable part comprises at least one second engagement mechanism and the transfer mechanism comprises at least one switching shaft, fixedly connected to the at least one first gable, wherein in the first position, the at least one switching shaft engages with the at least one second engagement mechanism. By that, the switching mechanism may be used to turn the transfer mechanism into position, in which it may be locked in relation to the chassis (by the locking pin). Preferably, the at least one second engagement mechanism of the moveable part is edges of a recess of the moveable part.

According to an embodiment, the cable installation device further comprises a support wheel arranged opposite the drive wheel, at a first distance from the drive wheel, thereby forming a first guiding gap between the drive wheel and the support wheel. The support wheel and the drive wheel form a first drive set of wheels, and the support wheel is arranged for directly or indirectly engaging with the cable which is to be installed in the duct. The set of wheels gives a good support for the cable when it passes the driving wheel.

According to an embodiment, the cable installation device further comprises a second drive wheel, a second drive shaft, which extends along a third axis, a second drive unit connected to the second drive shaft and arranged for driving the second drive shaft to rotate with the rotational speed and with the power. Further, e cable installation device comprises a second transfer mechanism for transferring the power of the second drive shaft to the second drive wheel, and the second transfer mechanism is connected to the second drive shaft and to the second drive wheel, wherein the second transfer mechanism can be in a first state, in which the second transfer mechanism transfers the power of the second drive shaft to the second drive wheel so that the second drive wheel rotates with the rotational speed of the second drive shaft, when the drive unit drives the second drive shaft. In a second state, the second transfer mechanism transfers the power of the second drive shaft to the second drive wheel so that the second drive wheel rotates with a second rotational speed that is lower than the rotational speed of the second drive shaft, when the drive unit drives the second drive shaft, and further, the cable installation device comprises a second switching mechanism arranged for switching the second transfer mechanism between the first state and the second state. By having a similar setup of drive mechanism, as described above with second drive wheel, second drive shaft etc., a more controlled guiding of the cable through the cable installation device towards the duct, is achieved, and other advantages corresponding to known such cable installation devices applies also to this embodiment of the invention.

According to an embodiment, the cable installation device further comprises a second support wheel arranged opposite the second drive wheel at a distance from the second drive wheel thereby forming a second guiding gap between the second drive wheel and the second support wheel, forming a second drive set of wheels, which second drive wheel and second support wheel are arranged for directly or indirectly engaging with the cable to be installed in the duct for driving the cable into the duct, wherein the second drive set of wheels is positioned at a distance from the first set of drive wheels. The same advantages as described above in relation to the support wheel also applies to the second support wheel.

According to an embodiment, the cable installation device further provides an elongated guiding space, through which the cable, which is to be installed in the duct, is guided through the cable installation device, between the first guiding gap of the first drive set and the second guiding gap of the second drive set. This gives a straight and guided line where the cable is guided in a controlled and advantageous way towards the duct.

### Brief description of drawings

The invention is now described, by way of example, with reference to the accompanying drawings, in which:
Fig. 1a shows an isometric view of a cable installation device according to the invention and Fig. 1b shows a side view of a cable installation device of Fig. 1, where a housing is removed to show the interior of the cable installation device.
Fig. 2 shows an exploded view of a drive mechanism of the cable installation device of Fig 1, which drive mechanism comprises a drive wheel, a transfer mechanism and a switching mechanism.
Fig. 3a-c show parts of the drive mechanism in more detail, where Fig. 3a shows the drive mechanism from the side, Fig. 3b shows a front view of the drive wheel and transfer mechanism and Fig. 3c shows a front view of a ring part of a chassis of the cable installation device.
Fig. 4a-d show different views of the drive mechanism in a first state - position A - where Fig. 4a and 4c are side views and Fig. 4b and 4d are section views.
Fig. 5a-d show different views of the drive mechanism in a second state - position B - where Fig. 5a and 5c are side views and Fig. 5b and 5d are section views.
Fig. 6a show a side view of the drive mechanism in the first state - position A - and Fig. 6b is a section view through a gable part of the switching mechanism, showing how a setting is performed for switching between the first state and second state (position A and position B).

### Description of embodiments

In the following, a detailed description of a cable installation device 1 according to the invention, is described.

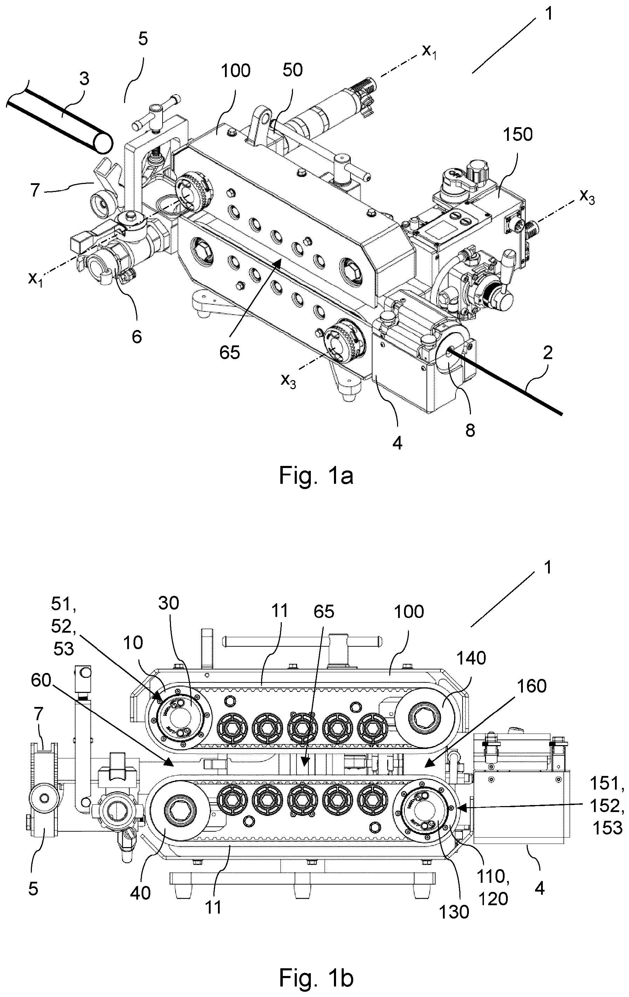

Fig. 1a-b shows an isometric view and a side view of the cable installation device 1, which is arranged for installing a cable (cable/fiber) into a duct. The cable installation device 1 is within the technical field often called "fiber blowing machine", since the cable(s) may be "blown" into the duct by means of air or water (or another fluid) but the cable is not blown into the duct in that manner, but is fed into the duct by the cable installation device 1 and the fluid may be used both for driving one or several motors and for blowing air (or other fluid) into the duct, simultaneously as the device pushes the cable 2 into the duct. The cable installation device 1 therefore comprises numerous devices/features, known in the art, such as air valves, duct clamps, manometers, controllers, etc., which are not discussed in further detail in this application. The cable installation device 1 is built on a chassis 100 and comprises a first end 4 which is arranged for receiving a cable 2 which is to be installed in a duct 3. The cable 2 may be arranged on a roll or the like (not visible), upstream the cable installation device 1, in a known manner. Some of the devices/features mentioned above may be seen in Fig. 1a-b, for example an air inlet 6 (with a shut-off valve), a duct clamp 7, an inlet clamp 8, etc. The duct 3, is as understood attached to the second end 5 and is clamped (held) by the duct clamp 7. In this particular cable installation device 1, there are two similar driving mechanisms, where the first one is arranged near the duct side (the second end) and comprises a drive shaft 51, 52, 53, which extends along a first axis x₁, a drive unit 50 (motor) connected to the drive shaft 51, for driving the drive shaft 51, 52, 53 to rotate with a rotational speed and with a power P. The first driving mechanism further comprises a drive wheel 10, which is arranged for directly or indirectly engaging with the cable 2, in this case, the cable installation device 1 has a belt drive why the drive wheel is arranged for engaging with a drive belt 11, which engages with and drives the cable 2, which is to be installed in the duct 3. A support wheel 40 is arranged opposite the drive wheel 10, at a first distance from the drive wheel 10, and thereby forming a first guiding gap 60 between the drive wheel 10 and the support wheel 40. The support wheel 40 and the drive wheel10, so to speak form a first drive set of wheels 10-40, and the support wheel 40 is also arranged for indirectly (or directly) engage with the cable 2 via engagement with the drive belt 11. The size of the first guiding gap 60 is adapted to the size of the cable 2 to be installed into the duct 3. At least one of the support wheel 40 and the drive wheel 10 is moveable so that the size of the first guiding gap 60 can be adapted to the size of the cable to be installed into the duct.

The second driving mechanism is similar with the first but a "mirror copy" of the first, that is that the respective drive wheel/support wheel are arranged on opposite sides of the drive belt 11, see Fig. 1a-b. The second driving mechanism comprises a second drive shaft 151, 152, 153, which extends along a third axis x₃, a second drive unit 150 (motor) which is connected to the second drive shaft 151, 152, 153, for driving the second drive shaft to rotate with a rotational speed and with a power P. The second driving mechanism further comprises a second drive wheel 110, which is arranged for directly or indirectly engaging with the cable 2. In a similar way, the second driving mechanism comprises a second support wheel 140 arranged opposite the second drive wheel 110, at a first distance from the second drive wheel 110, and forming a second guiding gap 160. The second support wheel 140 and the second drive wheel 10, form a second drive set of wheels 110-140, and the second support wheel 140 is also arranged for indirectly (or directly) engage with the cable 2 via engagement with the drive belt 11. Between the two sets of wheels, is an elongated guiding space 65 arranged, through which the cable 2 is guided through the cable installation device 1, between the first guiding gap 60 of the first drive set 10-40 and the second guiding gap 160 of the second drive set of wheels 110-140.

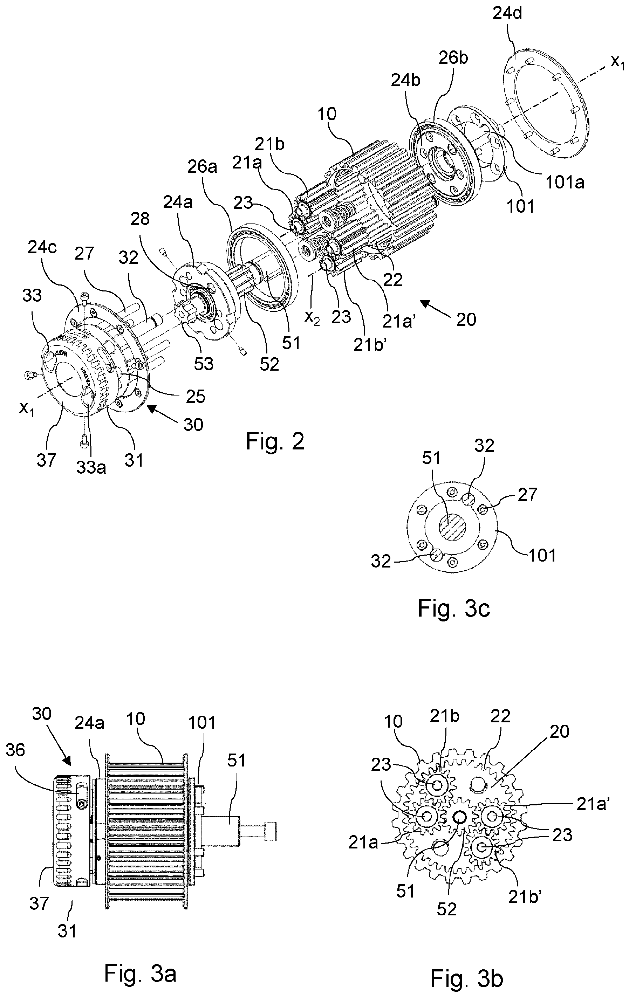

Fig. 2 shows an exploded view of one of the two drive mechanisms of the cable installation device 1, which comprises the drive wheel 10, a transfer mechanism 20 and a switching mechanism 30. Fig. 3a-c show parts of the drive mechanism in more detail, where Fig. 3a shows the drive mechanism from the side, Fig. 3b shows a front view of the drive wheel 10 and the transfer mechanism20 and Fig. 3c shows a front view of a ring part 101 of the chassis 100 of the cable installation device 1. The transfer mechanism 20 is arranged for transferring the power P of the drive shaft 51, 52, 53 to the drive wheel 10. The drive wheel 10 actually is the outside of a gearwheel which has a plurality of teeth which face the drive belt 11 (see Fig. 1b), which drive belt 11 in turn has corresponding teeth for engagement with the drive wheel 10. The drive shaft 51, 52, 53 has an extension in the first axis x₁ direction and comprises a first shaft part 51, a second shaft part 52 and a third shaft part 53. The second and third shaft parts 52, 53 are preferably arranged as gearwheels arranged on the drive shaft 51.

As can be seen in Fig. 3b, the drive wheel 10 is centrally arranged around the drive shaft 51, 52 and the inside of the drive wheel 10 comprises first engagement means 22, fixedly connected to the inside of the drive wheel 10 such that the first engagement means 22 faces the drive shaft 51, 52, i.e., the first engagement means 22 is an inner gearwheel of the drive wheel. Between the first engagement means 22 and the drive shaft 51, 52 is a set of transfer wheels 21a, 21b, and a similar second set of transfer wheels 21a', 21b', arranged. These are as mentioned arranged between the drive shaft 51, 52 and the drive wheel 10, in a radial direction of the drive shaft. The first engagement means 22 and the transfer wheels are preferably also arranged as gearwheels. The second set of transfer wheels 21a', 21b' is circumferentially displaced around the drive shaft 51, 52 in relation to the set of transfer wheels 21a, 21b. The set of transfer wheels 21a, 21b comprises a first transfer wheel 21a and at least one second transfer wheel 21b, wherein the first transfer wheel 21a is engaged with the drive shaft 51, 52 and the at least one second transfer wheel 21b is engaged with the first engagement means 22, and the first transfer wheel 21a is engaged with the at least one second transfer wheel 21b. In a similar way, the second set of transfer wheels 21a', 21b' comprises a transfer wheel 21a' and at least one second transfer wheel 21b', wherein the first transfer wheel 21a' is engaged with the drive shaft 51, 52 and the at least one second transfer wheel 21b' is engaged with the first engagement means 22, and the first transfer wheel 21a' is engaged with the at least one second transfer wheel 21b'. The set of transfer wheels 21a, 21b and the second set of transfer wheels 21a', 21b' are positioned on the same axial position along the drive shaft 51 or at least share same axial position. The second set of transfer wheels 21a', 21b' may be circumferentially displaced around the drive shaft from the set of transfer wheels 21a, 21b by approximately 150 - 210 degrees, preferably by 170 -190 degrees, most preferably by 180 degrees. In another embodiment, there may also be a third set of transfer wheels (not shown) arranged in a similar way as the set of transfer wheels 21a, 21b and the second set of transfer wheels 21a', 21b'. In this embodiment, the set of transfer wheels, the second set of transfer wheels and the third set of transfer wheels are preferably more or less equally spaced circumferentially around the drive shaft 51.

The transfer mechanism 20 further comprises a first gable 24a and a second gable 24b, which is mutually displaced along the drive shaft 51, and further one transfer shaft 23 per transfer wheel of the set of transfer wheels 21a, 21b band per transfer wheel of a second set of transfer wheels 21a', 21b'. The transfer shafts 23 each has an extension along a second axis x₂, parallel with the drive shaft 51 and each transfer shaft 23 is fixedly arranged to the first gable 24a and to the second gable 24b, by screws 27, and extend thereby between the first and second gables 24a, 24b. Each transfer wheel 21a, 21b, 21a', 21b' is rotationally arranged on its respective transfer shaft 23, and the transfer shafts 23 are arranged at a distance from each other. The transfer mechanism 20 thus is arranged as complete unit and the complete transfer mechanism unit 20 is rotationally arranged in relation to the drive wheel 10/first engagement means 22, by a first bearing 26a and a second bearing 26b, arranged on opposite sides of the drive wheel 10, radially outside the respective first and second gable 24a, 24b.

The switching mechanism 30 is arranged for switching the transfer mechanism 20 between the first state and the second state, that is, between a first position A and a second position B, in which different states/positions the drive wheel 10 will either rotate with the rotational speed of the drive shaft 51, 52, 53, or with a second rotational speed that is lower than the rotational speed of the drive shaft, which will be further explained below. This must only be done when the cable installation device 1 is stopped, to prevent from damage. The switching is possible by that the switching mechanism 30 can take on a first position A and a second position B, which are two positions along the first axial direction x₁ of the drive shaft 51, 52, 53. The switching mechanism 30 comprises an axially moveable part 31, which is arranged to move axially along the first axis x₁, towards the drive wheel 10 into the second position B and away from the drive wheel 10 into the first position A. The axially moveable part 31, comprises a fifth gable 36, which comprises an engaging mechanism 35, which is the edges of a recess 35a, arranged in the fifth gable 36. When the switching mechanism 30 is in the first position A, an end 53 of the drive shaft 51, 52, 53 is engaged with the engaging mechanism 35, so that the axially moveable part 31 rotates with the rotation of the drive shaft. The end 53 of the drive shaft 51, 52, 53 preferably comprises a gearwheel and the recess with its engaging mechanism 35 has corresponding shape as the gearwheel. The recess profile may have other designs, for example be polygonal, such as torx shaped or the like.

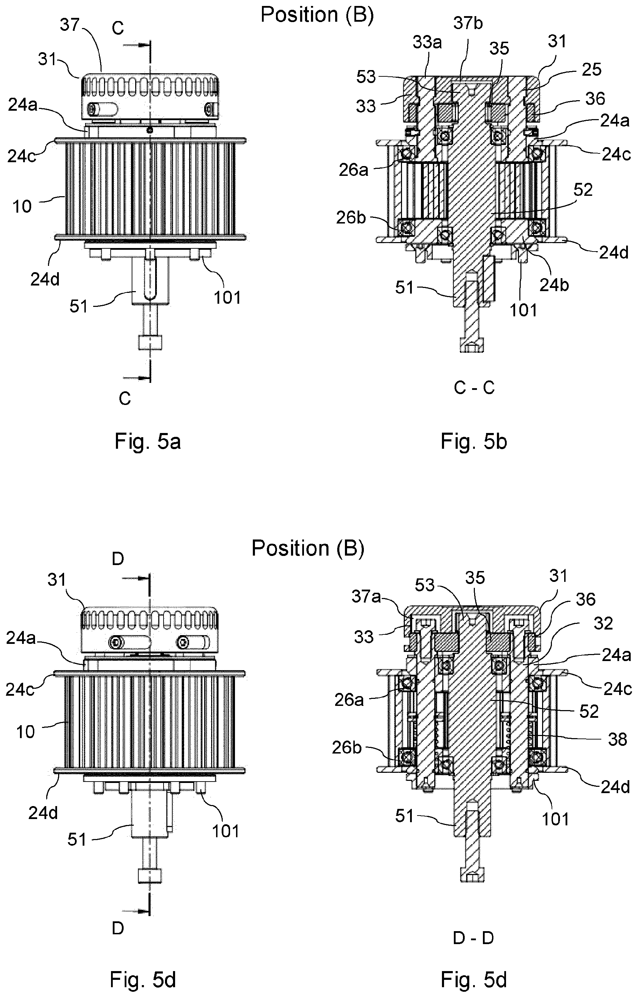

The axially moveable part 31 of the switching mechanism 30 further comprises at least one locking pin 32, preferably two locking pins 32, which, in the first position A, is disengaged with the ring part 101 of the chassis 100 of the cable installation device 1. In the second position B, the locking pin(s) 32, is/are engaged with the chassis 100,101 (see Fig. 3c and 5d), wherein the complete "transfer mechanism unit 20" is prevented from movement with the drive shaft 10. This means that the first and second gables 24a, 24b is locked by that the locking pin(s) 32, is/are engaged with the chassis 100,101 and instead, the transfer wheels 21a, 21b, 21a', 21b', rotates around their respective own axis/shaft 23, since they are engaged with each other as well as with the transfer shaft 23 and the first engagement means 22. To put the transfer mechanism 20 in position for shifting from position A to position B, the axially moveable part 31 of the switching mechanism 30 is arranged to engage with the transfer mechanism 20 that the axially moveable part 31 comprises at least one second engagement mechanism 33, which preferably is/are one or preferably two recess(es) 33a in a lid part 37 of the axially moveable part 31, and the second engagement mechanism 33 is/are the edges of the recess(es) 33a. The transfer mechanism 20 comprises at least one switching shaft 25 (preferably two), which is/are fixedly connected to the at least one first gable 24a, by means of screws. In the first position A, the at least one switching shaft 25 engages with the at least one second engagement mechanism 33, wherein the transfer mechanism 20 may be rotated to a position in which the locking pin(s) 32, is/are possible to engage with the chassis 100,101, by pressing the axially moveable part 31 in direction towards the drive wheel 10/ the chassis 100, wherein the locking pin(s) 32 may engage a recess/hole in the ring part 101 of the chassis 100. This will be explained further below.

The drive wheel 10 with its inside first engagement means 22 is fixedly attached between two opposite third and fourth gables 24c, 24d by means of screws and is by that arranged as one "complete drive wheel unit" which is rotatable in relation to the "transfer mechanism unit" by the first bearing 26a and the second bearing 26b.

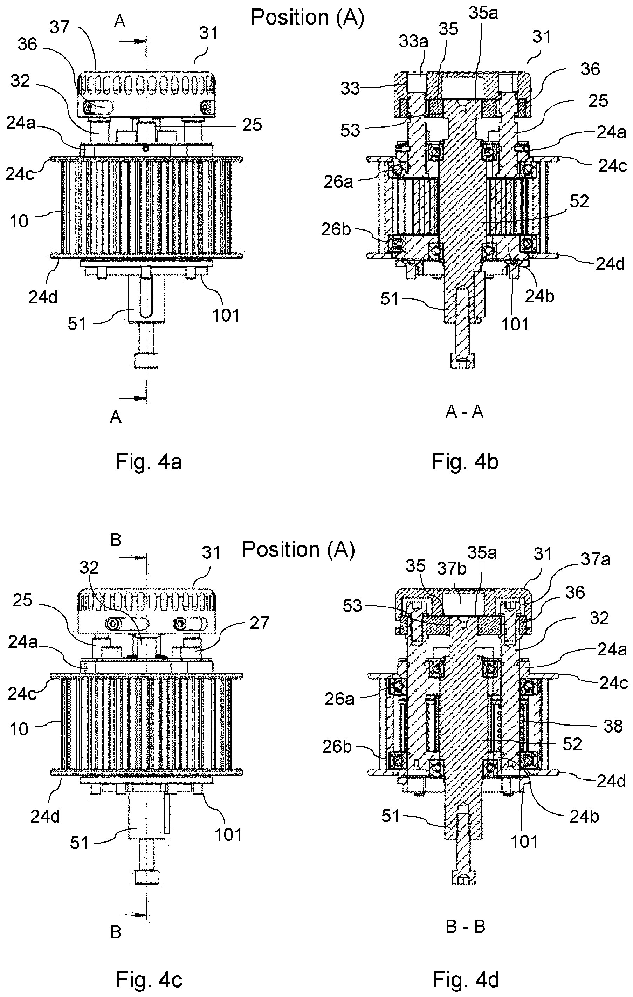

Fig. 4a-d show different views of the drive mechanism in the first state - position A - where Fig. 4a and 4c are side views with a 90° rotation between the views, and Fig. 4b and 4d are section views, A-A and B-B, taken through the side views in 4a and 4c, as shown with section markings. In position A, the axially moveable part 31 is distal from the drive wheel 10, and in Fig. 4b, one can see how the engaging mechanism 35 (the edges of the recess 35a) of the fifth gable 36 of the axially moveable part 31, engages with the end 53/gearwheel 53 of the drive shaft 51, wherein the axially moveable part 31 is forced to rotate with the rotation of the drive shaft 51.

Further, in position A, the two locking pins 32 are disengaged with the ring part 101 of the chassis 100, see Fig. 4c-d. The locking pins 32 are fixedly attached to the fifth gable 36 of the axially moveable part 31, by means of screws, which top ends are arranged in a cavity 37a of the lid part 37 of the axially moveable part 31. By that the moveable part 31 is locked in relation to the complete "transfer mechanism unit 20", by the switching shafts 25, which are fixedly connected to the at least one first gable 24a (as explained above), and that the axially moveable part 31 is forced to rotate with the rotation of the drive shaft 51, via the connection with the gearwheel 53 of the drive shaft 51, the complete "transfer mechanism unit 20" rotates with the rotation of the shaft, in position A. As can be seen in Fig. 3b, the rotation and by that the power of the cable installation device 1, is transferred from the drive shaft 51, 52, via gearwheel teeth to the first gearwheels/transfer wheels 21a 21a', further to the second gearwheels/transfer wheels 21b, 21b' and to the first engagement means 22 at the inside of the drive wheel 10. Thus, the rotation and force are transferred to the drive belt 11 and further to the cable/fiber 2.

Fig. 5a-d show different views of the drive mechanism in the second state - position B - where Fig. 5a and 5c are side views with a 90° rotation between the views, and Fig. 5b and 5d are section views, C-C and D-D, taken through the side views in 5a and 5c, as shown with section markings. In position B, the axially moveable part 31 is close to the drive wheel 10 (at least closer compared to position B) and in Fig. 5b, one can see how the engaging mechanism 35 (the edges of the recess 35a) of the fifth gable 36 of the axially moveable part 31, is disengaged with the end 53/gearwheel 53 of the drive shaft 51, wherein the end 53/gearwheel 53 of the drive shaft 51 is positioned into a second cavity 37b of the lid part 37, which second cavity 37b is larger than the gearwheel 53 and has a round shape, to enable the gearwheel 53 to rotate in the second cavity 37b. In Fig. 5d, one can see that the two locking pins 32 are engaged with the ring part 101 of the chassis 100, since the axially moveable part 31 is in a position in which it has been able to take the second state - position B, wherein the axially moveable part 31 with its two locking pins 32 are pushed in direction towards the drive wheel 10, and by that being engaged with the ring part 101 of the chassis 100. In this position, the complete transfer mechanism (unit) 20 is prevented from movement with the drive shaft 10.

In this second state - position B, the first and second gables 24a, 24b are locked by the locking pin(s) 32 engaging with the chassis 100,101, wherein the transfer wheels 21a, 21b, 21a', 21b', rotates around their respective own axis/shaft 23, since they are engaged with each other as well as with the transfer shaft 23 and the first engagement means 22, as also explained above. See also Fig. 3b. To put the transfer mechanism 20 in position for shifting from position A to position B, after stopping of the drive means 50 (motor), the axially moveable part 31 is rotated by grabbing the lid part 37, turning it wherein the second engagement mechanism 33 (the edges of the recess(es) 33a) engages with the switching shafts 25 of the transfer mechanism 20, and the transfer mechanism 20 is rotated to a position in which the locking pins 32 are in position of two corresponding recesses 101a of the ring part of the chassis 100. In this position, the axially moveable part 31 may be pushed in direction to towards the drive wheel 10/ the chassis 100, and the locking pins 32 may engage with ring part 101 of the chassis 100. As explained above, the drive wheel 10 may still rotate despite that the transfer mechanism 20 is in its "locked state" in relation to the chassis 100, by the first bearing 26a and the second bearing 26b. In the second position B, the axially moveable part 31, the first and second gables 24a, 24b, the locking pins 32 etc. of the transfer mechanism 20, are locked to the ring part 101 and thereby to the chassis 100 of the cable installation device 1, wherein the device is put into the state where the drive wheel 10 rotates with a second rotational speed that is lower than the rotational speed of the drive shaft 51, when the drive unit 50 drives the drive shaft 51. The locking pins 32 are enclosed by a respective spring 38, which is arranged to spring the axially moveable part 31, from position B to position A, when possible. When the switching mechanism 30 is in the first position A, the spring 38 is in a not compressed state and when the switching mechanism 30 is in the second position B, the spring 38 is a compressed state, (see Fig. 4d and 5d).

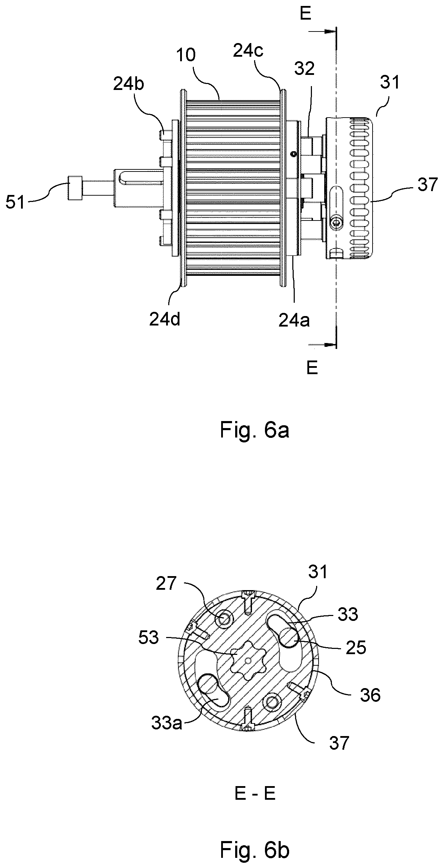

Fig. 6a show a side view of the drive mechanism in the first state - position A - and Fig. 6b is a section view E-E, through a gable part, the fifth gable 36 of the switching mechanism 30. Fig. 6b shows how the setting is performed for switching between the first state and second state (position A and position B). The lid part 37 is fixedly attached to the fifth gable 36 by means of screws as can be seen in the figure, and gearwheel 53 of the drive shaft 51 is in this position engaged with the fifth gable 36, by the engaging mechanism 35 / edges of the recesses 35, of the fifth gable 36, wherein a turning of the lid part 37 causes the transfer mechanism 20 to rotate. In the position where the axially moveable part 31 is possible to press axially towards the chassis 100 / drive wheel 10, i.e., in the second position B, it is pressed towards the chassis 100. In this position, the axially moveable part 31 may be locked in this position, by that the recess 33a is keyhole-shaped, wherein the switching shafts 25 is locked by turning the lid part 37 such that the switching shafts 25 are locked into the keyhole 33a.

## Claims

1. A cable installation device (1) arranged for installing a cable (2) into a duct (3), wherein the cable installation device (1) comprises:
- a first end (4) arranged for receiving a cable (2) to be installed in a duct (3),
- a second end (5) arranged for receiving an end of a duct (3) into which the cable (2) is to be installed,
- a drive shaft (51, 52, 53), extending along a first axis (x₁),
- a drive unit (50) connected to the drive shaft (51), and arranged for driving the drive shaft (51, 52, 53) to rotate with a rotational speed and with a power (P) ,
- a drive wheel (10) arranged for directly or indirectly engaging with the cable (2) to be installed in the duct (3) for driving the cable (2) into the duct (3),
**characterized in that** the cable installation device (1) further comprises
- a transfer mechanism (20) for transferring the power (P) of the drive shaft (51, 52, 53) to the drive wheel (10), the transfer mechanism (20) being connected to the drive shaft (51) and to the drive wheel (10), wherein the transfer mechanism (20) can be in a first state in which the transfer mechanism (20) transfers the power (P) of the drive shaft (51, 52, 53) to the drive wheel (10) so that the drive wheel (10) rotates with the rotational speed of the drive shaft (51, 52, 53), when the drive unit drives the drive shaft, and in a second state in which the transfer mechanism (20) transfers the power (P) of the drive shaft (51, 52, 53) to the drive wheel (10) so that the drive wheel (10) rotates with a second rotational speed that is lower than the rotational speed of the drive shaft, when the drive unit drives the drive shaft,
- a switching mechanism (30) arranged for switching the transfer mechanism (20) between the first state and the second state.

2. Cable installation device (1) according to claim 1, where the switching mechanism (30) can take on a first position (A) and a second position (B), wherein in the first position (A), the transfer mechanism (20) is in the first state, and in the second position (B), the transfer mechanism (20) is in the second state.

3. Cable installation device (1) according to claim 1 or 2, wherein the transfer mechanism (20) comprises a set of transfer wheels (21a, 21b) and first engagement means (22), wherein the set of transfer wheels (21a, 21b) is arranged between the drive shaft (51) and the drive wheel (10) in a radial direction of the drive shaft (51), and the first engagement means (22) is fixedly connected to the drive wheel (10) such that the first engagement means (22) faces the set of transfer wheels (21a, 21b), wherein the set of transfer wheels (21a, 21b) is engaged with the drive shaft (51) and with the first engagement means (22).

4. Cable installation device (1) according claim 3, wherein the transfer mechanism (20) comprises a second set of transfer wheels (21a', 21b'), wherein the second set of transfer wheels (21a,' 21b') is arranged between the drive shaft (51) and the drive wheel (10) in a radial direction of the drive shaft (51), wherein the first engagement means (22) faces the second set of transfer wheels (21a,' 21b') and the second set of transfer wheels (21) is engaged with the drive shaft (51) and with the first engagement means (22), wherein the second set of transfer wheels (21a', 21b') is circumferentially displaced around the drive shaft (51) in relation to the set of transfer wheels (21a, 21b).

5. Cable installation device (1) according to claim 3 or 4, wherein the set of transfer wheels (21a, 21b) comprises a first transfer wheel (21a) and at least one second transfer wheel (21b), wherein the first transfer wheel (21a) is engaged with the drive shaft (51), the at least one second transfer wheel (21b) is engaged with the first engagement means (22), and the first transfer wheel (21a) is engaged with the at least one second transfer wheel (21b).

6. Cable installation device (1) according to any of claims 3-5, wherein the drive shaft (51) is equipped with a gearwheel (52), wherein the set of transfer wheels (21a, 21b) is a set of transfer gearwheels and the first engagement means (22) is an inner gearwheel of the drive wheel (10), and wherein the set of transfer wheels (21a, 21b) is engaged with the drive shaft (51) by the set of transfer gearwheels (21a, 21b) being engaged with the gearwheel of the drive shaft (51), and wherein the set of transfer wheels (21a, 21b) is engaged with the first engagement means (22) by the set of transfer gearwheels (21a, 21b) being engaged with the inner gearwheel (22) of the drive wheel (10).

7. Cable installation device (1) according to any of claims 3-6, wherein the transfer mechanism (20) further comprises:
a first gable (24a) and a second gable (24b) mutually displaced along the drive shaft (51) and
one transfer shaft (23) per transfer wheel of the set of transfer wheels (21a, 21b) and, optionally, one transfer shaft (23) per transfer wheel of a second set of transfer wheels (21a', 21b'), which transfer shafts (23) each has an extension parallel with the drive shaft (51) and each is fixedly arranged to the first gable (24a) and to the second gable (24b), wherein each transfer wheel is rotationally arranged on its respective transfer shaft (23), and wherein the transfer shafts (23) are arranged at a distance from each other.

8. Cable installation device (1) according to any of claims 2-7, wherein the switching mechanism (30) comprises an axially moveable part (31), which is arranged to move axially along the first axis (x₁) towards the drive wheel (10) into the second position (B) and away from the drive wheel (10) into the first position (A), wherein in the first position (A), the axially moveable part (31) is arranged to rotate with the rotation of the drive shaft (51), and in the second position (B), the moveable part (31) is arranged not to rotate with the drive shaft (51).

9. Cable installation device (1) according to claim 8, wherein the axially moveable part (31) comprises an engaging mechanism (35), and wherein when the switching mechanism (30) is in the first position (A), an end (53) of the drive shaft (51, 52, 53) is engaged with the engaging mechanism (35), so that the axially moveable part (31) rotates with the rotation of the drive shaft.

10. Cable installation device (1) according to claim 8 or 9, wherein the axially moveable part (31) of the switching mechanism (30) comprises at least one locking pin (32) which, in the first position (A), is disengaged with a chassis (100, 101) of the cable installation device (1), and in the second position (B), is engaged with the chassis (100,101).

11. Cable installation device (1) according to any of claims 8 - 10 when dependent on claim 7, wherein the axially moveable part (31) of the switching mechanism (30) is arranged to engage with the transfer mechanism (20) by the moveable part (31) comprising at least one second engagement mechanism (33) and the transfer mechanism (20) comprising at least one switching shaft (25) fixedly connected to the at least one first gable (24a), wherein in the first position (A), the at least one switching shaft (25) engages with the at least one second engagement mechanism (33).

12. Cable installation device (1) according to any of the preceding claims, wherein the cable installation device (1) further comprises:
- a support wheel (40) arranged opposite the drive wheel (10) at a first distance from the drive wheel (10) thereby forming a first guiding gap (60) between the drive wheel (10) and the support wheel (40), the support wheel (40) and the drive wheel (10), forming a first drive set of wheels (10-40), which support wheel (40) is arranged for directly or indirectly engaging with the cable (2) to be installed in the duct (3).

13. Cable installation device (1) according to claim any of the preceding claims, wherein the cable installation device (1) further comprises:
- a second drive wheel (110),
- a second drive shaft (151, 152, 153), extending along a third axis (x₃),
- a second drive unit (150 connected to the second drive shaft (151, 152, 153), and arranged for driving the second drive shaft to rotate with the rotational speed and with the power (P),
- a second transfer mechanism (120) for transferring the power (P) of the second drive shaft (151, 152, 153) to the second drive wheel (110), the second transfer mechanism (120) being connected to the second drive shaft (151, 152, 153) and to the second drive wheel (110), wherein the second transfer mechanism (120) can be in a first state in which the second transfer mechanism (120) transfers the power (P) of the second drive shaft (151, 152, 153) to the second drive wheel (110) so that the second drive wheel (110) rotates with the rotational speed of the second drive shaft (151, 152, 153), when the second drive unit (150) drives the second drive shaft, and in a second state in which the second transfer mechanism (120) transfers the power (P) of the second drive shaft (151, 152, 153) to the second drive wheel (110) so that the second drive wheel (110) rotates with a second rotational speed that is lower than the rotational speed of the second drive shaft (151, 152, 153), when the second drive unit (150) drives the second drive shaft, and
- a second switching mechanism (130) arranged for switching the second transfer mechanism (120) between the first state and the second state.

14. Cable installation device (1) according to claim 13, wherein the cable installation device (1) further comprises:
- a second support wheel (140) arranged opposite the second drive wheel (110) at a distance from the second drive wheel (110) thereby forming a second guiding gap (160) between the second drive wheel (110) and the second support wheel (140), forming a second drive set of wheels (110-140), which second drive wheel (110) and second support wheel (140) are arranged for directly or indirectly engaging with the cable (2) to be installed in the duct (3) for driving the cable (2) into the duct (3), wherein the second drive set of wheels (110-140) is positioned at a distance from the first set of drive wheels (10, 40).

15. Cable installation device (1) according to claim 14, wherein the cable installation device (1) further provides an elongated guiding space (65), through which the cable (2) to be installed in the duct is guided through the cable installation device (1), between the first guiding gap (60) of the first drive set of wheels (10-40) and the second guiding gap (160) of the second drive set of wheels (110-140).
